(19) Europäisches Patentamt
European Patent Office
Office européen des brevets

(11) **EP 1 741 050 B1**

(12) **EUROPÄISCHE PATENTSCHRIFT**

(45) Veröffentlichungstag und Bekanntmachung des Hinweises auf die Patenterteilung:
**02.04.2008 Patentblatt 2008/14**

(21) Anmeldenummer: 05735841.8

(22) Anmeldetag: **18.04.2005**

(51) Int Cl.:
*G06K 19/07* (2006.01)

(86) Internationale Anmeldenummer:
**PCT/EP2005/051689**

(87) Internationale Veröffentlichungsnummer:
**WO 2005/101303 (27.10.2005 Gazette 2005/43)**

(54) **TRANSPONDER**

TRANSPONDER

TRANSPONDEUR

(84) Benannte Vertragsstaaten:
**DE FR**

(30) Priorität: **19.04.2004 DE 102004018829**

(43) Veröffentlichungstag der Anmeldung:
**10.01.2007 Patentblatt 2007/02**

(73) Patentinhaber: **VDO Automotive AG**
**93055 Regensburg (DE)**

(72) Erfinder:
• **TURBAN, Peter**
**93142 Maxhütte-Haidhof (DE)**
• **ZIMMER, Herbert**
**93049 Regensburg (DE)**

(56) Entgegenhaltungen:
**EP-A- 0 600 374          US-A- 5 227 740**
**US-A- 5 621 396**

EP 1 741 050 B1

**Beschreibung**

Die vorliegende Erfindung betrifft einen Transponder bestehend aus einem Schwingkreiskondensator und einer Schwingkreisspule, welche zur induktiven Energie- und/oder Datenübertragung eine induktive Kopplung zu einer Basisstation aufweist.

Ein solcher Transponder zum induktiven Übertragen von Energiesignalen und/oder Datensignalen ist zum Beispiel in der US 5,491,483 beschrieben. Dort ist eine Basisstation vorgesehen, die ein magnetisches Wechselfeld erzeugt, über welches ein Transponderschwingkreis des Transponders angeregt wird. Der angeregte Transponderschwingkreis speist eine Vorrichtung zum Aufladen eines Energiespeichers des Transponders, beispielsweise einen Kondensator. Für die darauf oder später folgenden Energie- bzw. Datenübertragung vom Transponder zur Basisstation wird der Transponderschwingkreis mittels einer Anregevorrichtung zum Schwingen auf seine spezifische Eigenfrequenz angeregt. Die dazu notwendige Energie zur Deckung insbesondere der Dämpfungsverluste des Transponderschwingkreises wird dem Energiespeicher des Transponders entnommen.

Ferner ist aus der US 5 621 396 A , dem nächsten Stand der Technik, ein Transponder mit einem aus einer Spule und einem Kondensator bestehenden Schwingkreis und einem Energiespeicher zur Energieversorgung des Schwingkreises bekannt. Darüber hinaus ist eine Anregevorrichtung zwischen Energiespeicher und Schwingkreis bekannt. Ein Peak-Level-Detektor in Verbindung mit einem Komparator bewirkt hierbei, dass der Schwingkreis derart mit Energie aus dem Kondensator versorgt wird, dass zu jedem Zeitpunkt eine ausreichende Signalstärke vorliegt, aber keine Energie dadurch verschwendet wird, dass der Schwingkreis zu stark angeregt wird.

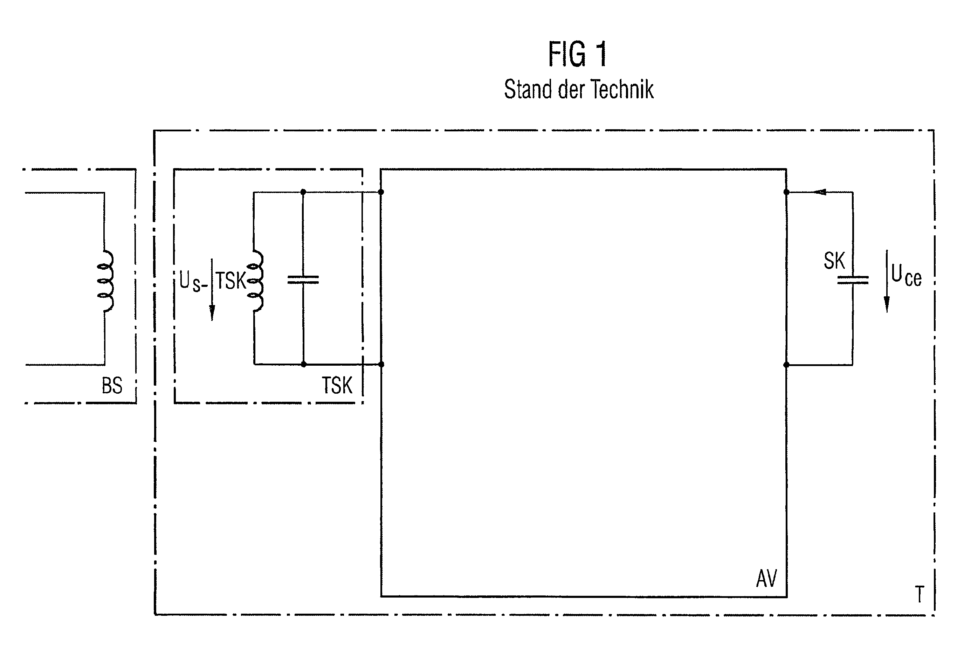

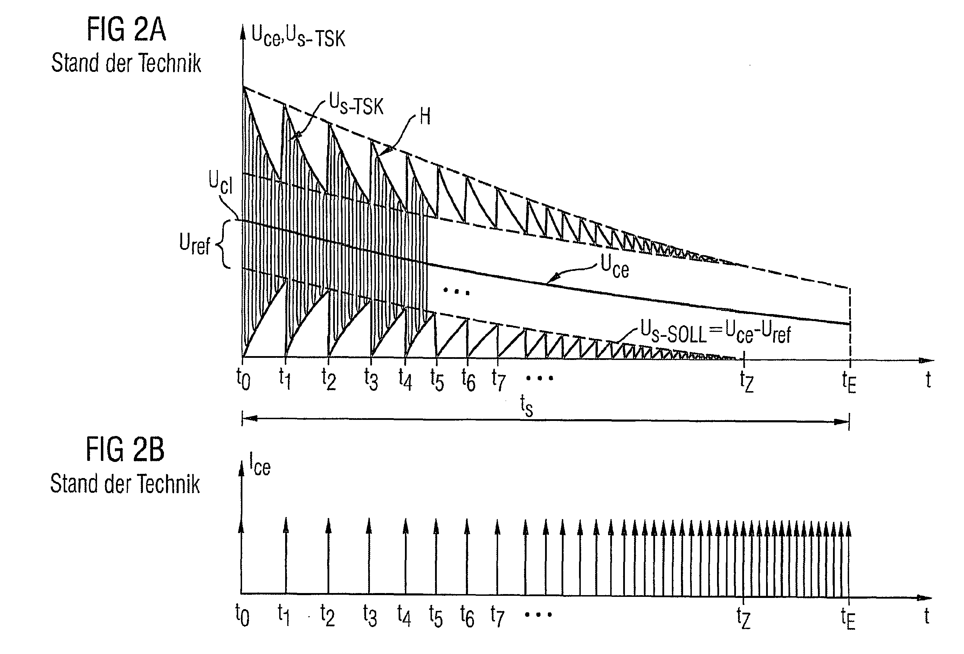

Bei bestehenden Systemen wird die Energieentnahme zudem aus dem Energiespeicher derart gesteuert, dass die Signal- oder Spannungsamplitude des Transponderschwingkreises beim Senden zum Protokollende hin erheblich kleiner ist als zu Beginn: Bei einstufigen Transpondersystemen ist das aufgrund der hohen Kopplung ein geringeres Problem, da die Signalamplitude generell sehr groß ist. Bei zweistufigen Systemen führt dies jedoch aufgrund der geringen Signalamplituden oftmals zu un-erwünscht geringen Signalrauschverhältnissen zum Protokollende bzw. zum Sendeende hin. Je geringer das Signalrauschverhältnis beim Sendevorgang durch den Transponder ist, desto größer wird die Fehlerwahrscheinlichkeit bei der Detektion der gesendeten Signale durch den Empfänger. Dies sei nachfolgend anhand der Fig. 1 und 2 beschrieben.

Fig. 1 zeigt ein schematisches Blockschaltbild eines allgemein bekannten Transponders (T) 1. Der bekannte Transponder (T) 1 zum induktiven Senden und Empfangen von Energiesignalen und/oder Datensignalen weist einen Transponderschwingkreis (TSK) 2 auf, welcher einerseits induktiv mit einer Basisstation (BS) 20 und andererseits mit einem Speicherkondensator (SK) 13 über eine Anregevorrichtung (AV) 3 gekoppelt ist. Beim Empfangen von Energie und/oder Daten wird der Speicherkondensator (SK) 13 mit einer Anfangs-Ladespannung $U_{cl}$ aufgeladen. Beim Senden wird der Speicherkondensator (SK) 13 entladen. Beim Entladevorgang fällt die Entladespannung $U_{ce}$ am Speicherkondastor (SK) 13 ab. Zum Sendebeginn $t_0$ entspricht der Betrag der Entladespannung $U_{Cc}$ dem Betrag der Anfangs-Ladespannung $U_{C1}$.

Beim Senden wird dem Transponderschwingkreis (TSK) 2 dann Energie mittels des Entladevorgangs aus dem Speicherkondensator (SK) 13 zugeführt, wenn die Sendespannung $U_{S\text{-}TSK}$ des Transponderschwingkreises (TSK) 2 kleiner als ein Sendespannungssollwert $U_{S\ SOLL}$ der Anregevorrichtung (AV) 3 ist. Der Sendespannungssollwert der Anregevorrichtung $U_{S\text{-}SOLL}$ ist durch die Differenz zwischen der aktuellen Entladespannung $U_{Ce}$ und einer Referenzspannung $U_{ref}$, welche von der Anregevorrichtung (AV) 3 fest vorgegeben ist, definiert.

Fig. 2a zeigt ein U-t-Diagramm zur Darstellung des zeitlichen Verlaufs der Sendespannung $U_{S\text{-}TSK}$ und der Entladespannung $U_{Ce}$ bei einem Sendevorgang für einen Transponder (T) 1 gemäß Fig. 1. Die Sendedauer $t_s$ ist durch die Zeitdauer zwischen dem Sendebeginn $t_0$ und dem Sendeende $t_E$ definiert.

Am Sendebeginn $t_0$ ist der Betrag der Entladespannung $U_{Ce}$ gleich dem Betrag der Anfangs-Ladespannung $U_{Cl}$. Die Entladespannung $U_{Ce}$ des Speicherkondensators (SK) 13 nimmt in ihrem zeitlichen Verlauf exponentiell ab. Die Kurve des Sendespannungssollwertes $U_{S\text{-}SOLL}$ ist durch die Differenz der Kurve der Entladespannung $U_{Cc}$ und dem Betrag der Referenzspannung $U_{ref}$ gegeben. Unterschreitet der Sendespannungsistwert $U_{S\text{-}IST}$ den Sendespannungssollwert $U_{S\text{-}SOLL}$, so regt die Anregevorrichtung ($A_V$) 3 den Transponderschwingkreis (TSK) 2 mittels des Entladestromes $I_{Cc}$ an. Das Anregen der Sendespannung $U_{S\text{-}TSK}$ des Transponderschwingkreises (TSK) 2 mittels des Entladestroms $I_{Ce}$ wird meist als sog. "Zupfen" bezeichnet.

Durch das exponentielle Abklingen der Entladespannung $U_{Cc}$ wird ab dem Zeitpunkt $t_z$ der Sendespannungsistwert $U_{S\text{-}IST}$ stets den Sendespannungssollwert $U_{S\text{-}SOLL}$ unterschreiten, wobei der Zeitpunkt $t_z$ den Zeitpunkt bezeichnet, ab dem die Entladespannung $U_{Ce}$ kleiner oder gleich der Referenzspannung $U_{ref}$ ist. Die Folge daraus ist ein ständiges "zupfen" zwischen den Zeitpunkten $t_z$ und dem Sendeende $t_E$. Erreicht die Entladespannung $U_{Ce}$ die Referenzspannung $U_{ref}$ bevor das Sendeende $t_E$ erreicht ist, so ist die Amplitude der Einhüllenden H der Sendespannung $U_{S\text{-}TSK}$ hinsichtlich des Signalrauschverhältnisses für das Senden nicht mehr ausreichend. Gemäß Fig. 2a wird das Signalrauschverhältnis für die Sendespannung $U_{S\ TSK}$ zwischen den Zeitpunkten $t_z$ und dem Sendeende $t_E$ zu gering sein.

Fig. 2b zeigt ein I-t-Diagramm zur Darstellung des Entladestromes $I_{Ce}$ bei einem Sendevorgang für einen Transponder (T) 1 gemäß Fig. 1. Zu den Zeitpunkten $t_0$, $t_1$, $t_2$ etc. wird ein Strompuls des Entladestromes $I_{Ce}$ generiert, welcher gemäß Fig. 1 und Fig. 2a den Transponderschwingkreis (TSK) 2 anregt. Zwischen den Zeitpunkten $t_0$ und $t_z$ wird der Abstand des "Zupfens" bzw. der Strompulse stetig kleiner, da die Entladespannung $U_{Ce}$ und damit der Sendespannungssollwert $U_{S\,SOLL}$ der Anregevorrichtung (AV) 3 exponentiell abnehmen. Die Einhüllende H der Sendespannung $U_{S-TSK}$ klingt damit exponentiell ab (siehe Fig. 2a, Fig. 2b), d.h. am Sendebeginn $t_0$ steht die meiste Signalenergie bzw. Signalamplitude zur Verfügung. Während der Sendedauer $t_s$ klingt die Signalamplitude bzw. Einhüllende H der Sendespannung $U_{S-TSK}$ immer weiter ab, das Signalrauschverhältnis wird somit stets geringer.

Liegt der Zeitpunkt $t_z$ vor dem Sendeende $t_E$, so weist das zu sendende Signal im Zeitraum zwischen $t_z$ und $t_E$ eine zu geringe Signalenergie auf. Eine zu geringe Signalenergie hinsichtlich des bestehenden physikalischen Sendekanals führt zu einem zu geringen Signalrauschverhältnis für eine korrekte Detektion des gesendeten Signals beim Empfänger.

Liegt aber der Zeitpunkt $t_z$ nach dem Ende der Signaldauer $t_E$, so wird nicht die gesamte Energie, die zum Senden zur Verfügung stehen würde, genutzt. Über die gesamte Sendedauer $t_s$ wird daher eine reduzierte Signalenergie für die Sendespannung $U_{S-TSK}$ zur Verfügung gestellt, obwohl der Speicherkondensator (SK) in der Lage wäre, mehr Energie zum Senden und damit zur Erhöhung des Signalrauschverhältnisses zur Verfügung zu stellen. Damit ist keine optimale Ausnutzung der von dem Speicherkondensator gegebenenfalls zur Verfügung stehenden Energie gegeben.

Vor diesem Hintergrund liegt der vorliegenden Erfindung daher die Aufgabe zugrunde, eine optimierte Energieversorgung für einen gattungsgemäßen Transponder bereitzustellen. Insbesondere soll auch das Signalrauschverhältnis verbessert werden.

Erfindungsgemäß wird diese Aufgabe durch einen Transponder mit den Merkmalen des Patentanspruchs 1 gelöst. Vorteilhafte Aus- und Weiterbildungen, welche einzeln oder in Kombination miteinander eingesetzt werden können, sind Gegenstand der abhängigen Ansprüche.

Der Transponder nach der Erfindung umfasst einen Transponderschwingkreis, einen Energiespeicher (SK) zur Energieversorgung sowie eine Anregevorrichtung. Der Transponderschwingkreis bestehend aus einem Schwingkreiskondensator und einer Schwingkreisspule, welche zur induktiven Energie-und/oder Datenübertragung eine induktive Kopplung zu einer Basisstation aufweist. Der Energiespeicher stellt beim Senden einen Entladestrom $I_{Cc}$ bereit. Schließlich ist die Anregevorrichtung (AV) derart zwischen dem Transponderschwingkreis (TSK) und dem Energiespeicher (SK) angeordnet, dass sie eine einstellbare Referenzspannung $U_{ref}$ erzeugt, welche beim Senden die Sendespannung $U_{S-TSK}$ derart regelt, dass eine Hüllkurve H der Sendespannung $U_{S-TSK}$ über eine Sendedauer $t_s$ konstant ist, sodass ein konstanter Entladestrom $I_{Ce}$ aus dem Energiespeicher (SK) den Transponderschwingkreis (TSK) speist und eine von der Referenzspannung $U_{ref}$ abhängige Entladespannung $U_{Ce}$ des Energiespeichers (SK) bis zu der Referenzspannung $U_{ref}$ an einem Sendeende $t_E$ linear abfällt.

Damit fußt die vorliegende Erfindung auf dem Gedanken, die Sendespannung $U_{S-TSK}$ mittels einer einstellbaren Referenzspannung $U_{ref}$ derart zu regeln, dass der Verbrauch der durch einen Energiespeicher (SK) bereitgestellten Energie optimiert ist.

Ein Vorteil der vorliegenden Erfindung ist, dass somit ein optimiertes Sendesignal bzw. eine optimierte Hüllkurve H der Sendespannung $U_{S-TSK}$ von Signalbeginn to bis zum Signalende $t_k$ eine konstante Amplitude aufweist. Somit ist das Signalrauschverhältnis für zu sendende Signale konstant und regelbar. Mittels der einstellbaren Referenzspannung $U_{ref}$ kann die beim Senden verbrauchte Energie so eingestellt werden, dass sie der in dem Energiespeicher (SK) gespeicherten Energie entspricht. Somit ist die Energiebilanz des Transponders (T) optimiert. Die in dem Energiespeicher gespeicherte Energie wird konstant an den Transponderschwingkreis (TSK) abgegeben, sodass zum Sendeende gerade noch ausreichend Energie für die Sendespannung $U_{S-TSK}$ zur Verfügung steht.

Gemäß einer bevorzugten Weiterbildung weist die Anregevorrichtung (AV) eine Einstellvorrichtung auf, welche die Referenzspannung $U_{ref}$ abhängig von einer Anfangs-Ladespannung $U_{cl}$, mit der der Energiespeicher während des Empfangens von Energie und/oder Daten aufgeladen wurde, von physikalischen Schaltungsparametern und von der Sendedauer des Transponders (T) einstellt. Vorteilhafterweise ist somit die Referenzspannung $U_{ref}$ abhängig von aktuellen Parametern für jeden Sendevorgang neu einstellbar, sodass der Energieverbrauch und das Signalrauschverhältnis für zu sendende Signale für jeden Sendevorgang optimiert werden können.

Gemäß einer weiteren bevorzugten Ausgestaltung weist die Anregevorrichtung (AV) einen Referenzspannungsbildner auf, welcher mittels der Anfangs-Ladespannung $U_{Cl}$, der Sendedauer $t_s$ und der physikalischen Schaltungsparameter $\tau$ die Referenzspannung $U_{ref}$ berechnet.

Gemäß einer weiteren bevorzugten Weiterbildung weist die Anregevorrichtung (AV) einen Ladespannungsgeber, welcher die Anfangs-Ladespannung $U_{Cl}$ misst und die gemessene Anfangs-Ladespannung $U_{Cl}$ an den Referenzspannungsbildner überträgt, einen Sendedauergeber, mit welchem die Sendedauer einstellbar ist und welcher die Sendedauer an den Referenzspannungsbildner überträgt, und einen Schaltungsparametergeber auf, in welchem die physikalischen Schaltungsparameter $\tau$ des Transponders (T) gespeichert sind und welcher die gespeicherten physikalischen Schaltungsparameter $\tau$ an den Referenzspannungsbildner überträgt. Vorteilhafterweise wird die Referenzspannung $U_{ref}$

möglichst in Abhängigkeit aller den Sendevorgang beeinflussenden Parameter berechnet.

Gemäß einer weiteren bevorzugten Ausgestaltung ist der Energiespeicher (SK) als ein Speicherkondensator (SK) ausgebildet.

Gemäß einer weiteren bevorzugten Ausgestaltung weist die Anregevorrichtung (AV) eine erste Differenzvorrichtung auf, welche einen Sendespannungssollwert $U_{S\text{-SOLL}}$ aus der Entladespannung $U_{Ce}$ des Energiespeichers und der Referenzspannung $U_{ref}$ berechnet.

Gemäß einer weiteren bevorzugten Ausgestaltung weist die Anregevorrichtung (AV) eine Sendespannungsmessvorrichtung auf, welche die aktuelle Sendespannung $U_S$ der Anregevorrichtung (AV) misst und damit einen Sendespannungsistwert $U_{S\text{-IST}}$ der Anregevorrichtung (AV) bereitstellt.

Gemäß einer weiteren bevorzugten Ausgestaltung weist die Anregevorrichtung (AV) eine zweite Differenzvorrichtung auf, welche eine Sollwert-Istwert-Differenz SID aus dem Sendespannungssollwert $U_{S\ SOLL}$ und dem Sendespannungsistwert $U_{S\ IST}$ berechnet.

Gemäß einer weiteren bevorzugten Ausgestaltung weist die Anregevorrichtung (AV) einen Regler und eine Anregeschaltung auf, wobei der Regler die Sollwert-Istwert-Differenz SID aufnimmt und daraus ein Anregesignal AS generiert und der Anregeschaltung zuführt, falls die Sollwert-Istwert-Differenz SID größer als Null ist, wobei die Anregeschaltung bei einem Vorhandensein eines Anregesignals AS den Transponderschwingkreis (TSK) mittels Energie aus dem Energiespeicher anregt.

Gemäß einer weiteren bevorzugten Ausgestaltung weist die Anregeschaltung eine gesteuerte Stromquelle auf, welche gesteuert durch das Anregesignal AS den Transponderschwingkreis (TSK) mittels des Entladestroms $I_{Ce}$ des Energiespeichers anregt.

Gemäß einer weiteren bevorzugten Weiterbildung sind die physikalischen Schaltungsparameter durch eine Schwingkreisfrequenz $f_{SK}$, eine Schwingkreisinduktivität $L_{SK}$ und/oder eine Schwingkreisgüte $Q_{SK}$ des Transponderschwingkreises (TSK) sowie durch eine Speicherkapazität des Energiespeichers (SK) ausgebildet. Vorteilhafterweise umfassen die physikalischen Schaltungsparameter alle den Transponder (T) betreffenden Parameter, sodass die berechnete Referenzspannung $U_{ref}$ zur Regelung der Sendespannung $U_{S\text{-TSK}}$ genau der Referenzspannung $U_{ref}$ entspricht, sodass der Energieverbrauch des Transponders (T) optimiert ist.

Die vorliegende Erfindung eignet sich insb. zum induktiven Senden und Empfangen von Energiesignalen und/oder Datensignalen. Sie wird nachfolgend anhand von Ausführungsbeispielen sowie der Zeichnung näher erläutert.

Darin zeigen schematisch:

Fig. 1        ein schematisches Blockschaltbild eines allgemein bekannten Transponders;

Fig. 2a      ein U-t-Diagramm zur Darstellung des zeitlichen Verlaufs der Sendespannung und der Entladespannung bei einem Sendevorgang für einen Transponder gemäß Fig. 1;

Fig. 2b      ein I-t-Diagramm zur Darstellung des Entladestromes bei einem Sendevorgang für einen Transponder gemäß Fig. 1;

Fig. 3        ein schematisches Blockschaltbild eines erfindungsgemäßen Transponders; und

Fig. 4        ein U-t-Diagramm zur Darstellung des zeitlichen Verlaufs der Sendespannung und der Entladespannung bei einem Sendevorgang für einen Transponder gemäß Fig. 3.

In allen Figuren der Zeichnung sind gleiche oder funktionsgleiche Elemente und Signale - sofern nichts anderes angegeben ist - mit denselben Bezugzeichen versehen.

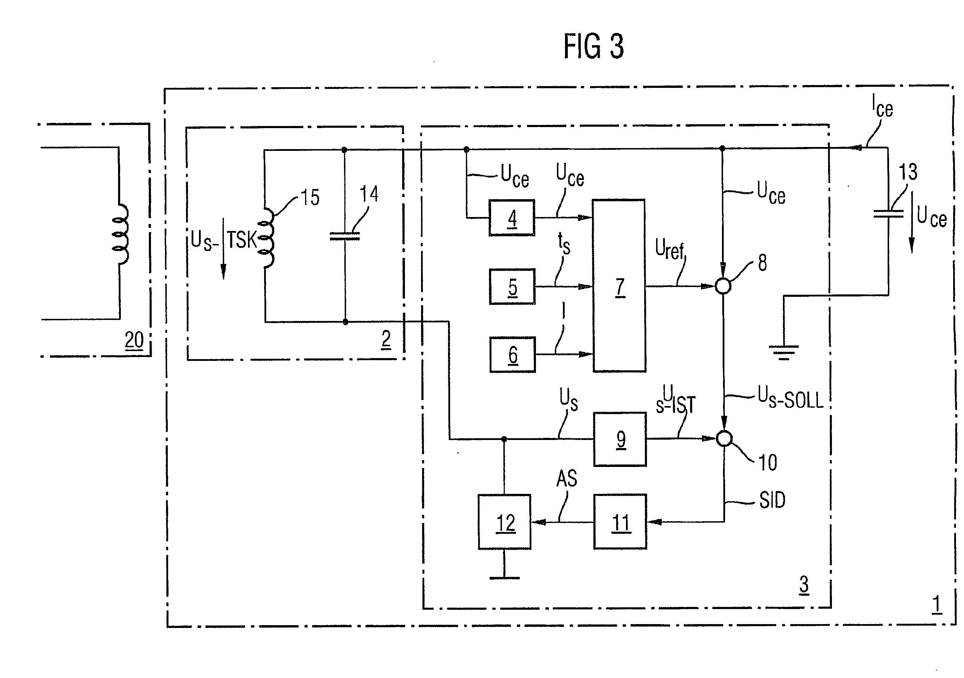

Fig. 3 zeigt ein schematisches Blockschaltbild eines erfindungsgemäßen Transponders (T) 1.

Der Transponder (T) 1 weist einen Transponderschwingkreis (TSK) 2 zum induktiven Senden und Empfangen von Energiesignalen und/oder Datensignalen auf. Dazu besteht der Transponderschwingkreis (TSK) 2 aus einem Schwingkreiskondensator (14) und einer Schwingkreisspule (15), welche zur induktiven Energie- und/oder Datenübertragung eine induktive Kopplung zu einer Basisstation (20) aufweist. Beim Senden ist der Transponderschwingkreis (TSK) 2 von einer Sendespannung $U_{S\text{-TSK}}$ abhängig.

Weiter weist der Transponder (T) 1 einen Energiespeicher 13 auf, welcher beim Senden einen Entladestrom $I_{Ce}$ bereitstellt. Vorzugsweise ist der Energiespeicher 13 als ein Speicherkondensator (SK) ausgebildet.

Des weiteren weist der Transponder 1 eine Anregevorrichtung (AV) 3 auf, welche zwischen dem Transponderschwingkreis (TSK) 2 und dem Energiespeicher (SK) 13 angeordnet ist. Die Anregevorrichtung (AV) 3 erzeugt eine einstellbare Referenzspannung $U_{ref}$, die beim Senden die Sendespannung $U_{S\ TSK}$ derart regelt, dass eine Hüllkurve H der Sendespannung $U_{S\text{-TSK}}$ über eine Sendedauer $t_s$ konstant ist. Somit speist ein konstanter Entladestrom $I_{Ce}$ der Energieversorgung (SK) 13 den Transponderschwingkreis (TSK) 2 und eine von der Referenzspannung $U_{ref}$ abhängige Entladespannung $U_{Ce}$ des Energiespeichers (SK) 13 fällt bis zu der Referenzspannung $U_{ref}$ an einem Sendeende $t_E$ linear ab.

In der Anregevorrichtung (AV) 3 ist eine Einstellvorrichtung 4 - 7 vorgesehen, welche die Referenzspannung $U_{ref}$ abhängig von einer Anfangs-Ladespannung $U_{Cl}$, von physikalischen Schaltungsparametern $\tau$ und von der Sendedauer ts des Transponders (T) 1 einstellt. Die Anfangs-Ladespannung $U_{Cl}$ entspricht der Spannung, mit welcher der Energiespeicher (SK) 13 während des Empfangens von Energie und/oder Daten aufgeladen wurde. Die physikalischen Schaltungsparameter $\tau$ sind durch eine Schwingkreisfrequenz $f_{SK}$, eine Schwingkreisinduktivität $L_{SK}$ und/oder eine Schwingkreisgüte $Q_{SK}$ des Transponderschwingkreises (TSK) 2 sowie durch die Speicherkapazität $C_s$ des Energiespeichers (SK) 13 ausgebildet.

Die Anregevorrichtung (AV) 3 weist einen Referenzspannungsbildner 7 auf, welcher mittels der Anfangs-Ladespannung $U_{C1}$, der Sendedauer $t_s$ und der physikalischen Schaltungsparameter $\tau$ die Referenzspannung $U_{ref}$ berechnet.

Die Anregevorrichtung (AV) 3 weist einen Ladespannungsgeber 4 auf, welcher die Anfangs-Ladespannung $U_{Cl}$ beim Empfangen von Energiesignalen und/oder Datensignalen misst und die gemessene Anfangs-hadespannung $U_{Cl}$ an den Referenzspannungsbildner 7 überträgt. Weiter weist die Anregevorrichtung (AV) 3 einen Sendedauergeber 5 auf, mit welchem die Sendedauer $t_s$ einstellbar ist und welcher die Sendedauer $t_s$ an den Referenzspannungsbildner 7 überträgt. Weiter weist die Anregevorrichtung (AV) 3 einen Schaltungsparametergeber 6 auf, in welchem die physikalischen Schaltungsparameter $\tau$ des Transponders 1 gespeichert sind und welcher die gespeicherten physikalischen Schaltungsparameter $\tau$ an den Referenzspannungsbildner 7 überträgt.

Eine erste Differenzvorrichtung 8 der Anregevorrichtung (AV) 3 berechnet einen Sendespannungssollwert $U_{S-SOLL}$ aus der Entladespannung $U_{Ce}$ des Energiespeichers (SK) 13 und der Referenzspannung $U_{ref}$:

$$U_{S\ SOLL} = U_{Ce} - U_{ref}$$

Die Anregevorrichtung (AV) 3 weist eine Sendespannungsmessvorrichtung 9 auf, welche die aktuelle Sendespannung $U_s$ der Anregevorrichtung (AV) 3 misst und damit einen Sendespannungsistwert $U_{S-IST}$ der Anregevorrichtung (AV) 3 bereitstellt.

Eine zweite Differenzvorrichtung 10 der Anregevorrichtung 3 berechnet eine Sollwert-Istwert-Differenz SID aus dem Sendespannungssollwert $U_{S-SOLL}$ der Anregevorrichtung (AV) 3 und dem Sendespannungsistwert $U_{S-IST}$ der Anregevorrichtung (AV) 3:

$$SID = U_{S-SOLL} - U_{S-IST}$$

Des Weiteren weist die Anregevorrichtung (AV) 3 einen Regler 11 und eine Anregeschaltung 12 auf, wobei der Regler 11 die Sollwert-Istwert-Differenz SID aufnimmt und daraus ein Anregesignal AS generiert und der Anregeschaltung 12 zuführt, falls die Sollwert-Istwert-Differenz ISD größer als Null ist. Bei einem Vorhandensein eines Anregesignals AS regt die Anregeschaltung 12 den Transponderschwingkreis (TSK) 2 mittels Energie, vorzugsweise mit dem Entladestrom $I_{Ce}$, aus dem Energiespeicher (SK) 13 an.

Vorzugsweise weist die Anregeschaltung 12 eine gesteuerte Stromquelle auf, welche gesteuert durch das Anregesignal AS den Transponderschwingkreis (TSK) 2 mittels des Entladestroms $I_{Ce}$ des Energiespeichers (SK) 13 anregt.

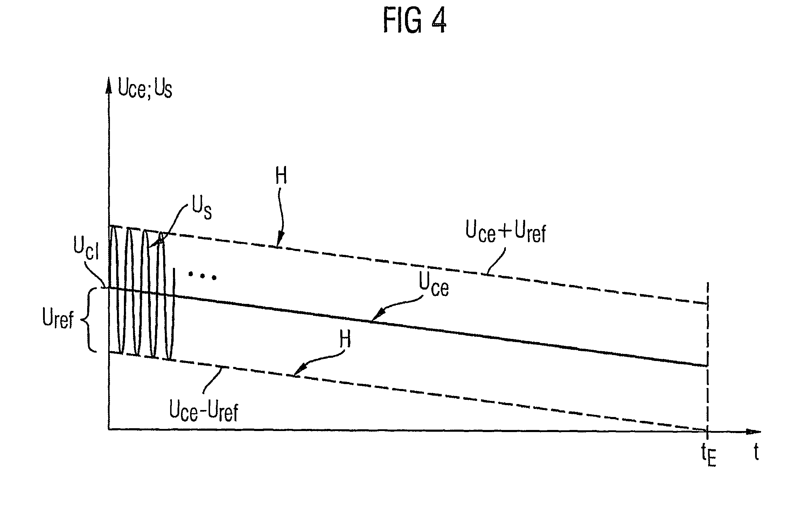

Fig. 4 zeigt ein Spannungs-Zeit-(U-t)-Diagramm zur Darstellung des zeitlichen Verlaufs der Sendespannung $U_{S-TSK}$ und der Entladespannung $U_{Ce}$ bei einem Sendevorgang für einen erfinderischen Transponder (T) 1 gemäß Fig. 3.

Die Abszisse bezeichnet die Zeitachse t, wobei die Sendedauer $t_s$ am Sendebeginn $t_0$ beginnt und am Sendeende $t_E$ endet.

Die Entladespannung $U_{Ce}$ entspricht am Sendebeginn $t_0$ der Anfangs-Ladespannung $U_{Cl}$, mit welcher der Energiespeicher (SK) 13 aufgeladen wurde.

Wie oben bereits erläutert, fällt die Entladespannung $U_{Ce}$ ausgehend von der Anfangs-Ladespannung $U_{Cl}$ und abhängig von der Referenzspannung $U_{ref}$, der zeit t und den physikalischen Schaltungsparameter $\tau$ linear ab. Die Entladespannung $U_{Cc}$ ergibt sich wie folgt:

$$U_{Ce}(t) = U_{C1} - \frac{U_{ref}}{\tau} t$$

wobei für die physikalischen Schaltungsparameter $\tau$ gilt:

$$\tau = 4\pi * f_{SK} * L_{SK} * Q_{SK} * C_S$$

Während der Sendedauer $t_s$ fällt die Entladespannung $U_{Ce}$ linear ab. Der Sendespannungssollwert $U_{S-SOLL}$, welcher durch die Differenz der Entladespannung $U_{Ce}$ und der Referenzspannung $U_{ref}$ gegeben ist, fällt analog zu der Entladespannung $U_{Ce}$ linear ab.

Zum Sendeende $t_E$ entspricht die Entladespannung $U_{Ce}$ gemäß der erf3ndungsgemäben Energiebilanz der Referenzspannung $U_{ref}$ [$U_{Ce}$ (t=$t_E$)-$U_{ref}$ = O]. Mittels dieser Bedingung berechnet die Anregevorrichtung (AV) 3 die optimale Referenzspannung $U_{ref}$ und stellt diese wie folgt ein:

$$U_{ref} = \frac{U_{C1}}{1 + \frac{t_E}{\tau}}$$

Vorteilhafterweise schwingt die Sendespannung $U_{S-TSK}$ nun zwischen $U_{Ce}$-$U_{ref}$ und $U_{Ce}$+$U_{ref}$, da die Sendespannung $U_{S-TSK}$ erfindungsgemäß auf die eingestellte Referenzspannung $U_{ref}$ geregelt ist. Damit ist die Hüllkurve H der Sendespannung $U_{S-TSK}$ über die gesamte Sendedauer $t_s$ konstant.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

Beispielsweise kann der Transponderschwingkreis (TSK) weitere Kapazitäten aufweisen, sodass zwischen verschiedenen Schwingkreisfrequenzen umgeschaltet werden kann (Frequency Shift Keying, FSK). Weiter können die erste und die zweite Differenzvorrichtung als eine einzige Differenzvorrichtung ausgebildet sein. Des Weiteren kann der Transponderschwingkreis (TSK) zum Senden und Empfangen von Energie- und/oder Datensignalen mit einem Zwischenkreis (Ringantenne) induktiv gekoppelt sein.

Die vorliegende Erfindung hat zum Vorteil, dass sie ein optimiertes Sendesignal bzw. eine optimierte Hüllkurve der Sendespannung von Signalbeginn bis Signalende eine konstante Amplitude aufweist. Damit ist das Signalrauschverhältnis für zu sendende Signale konstant und regelbar. Mittels der Referenzspannung kann die beim Senden verbrauchte Energie so eingestellt werden, dass die nutzbare Energie über die gesamte Protokollzeit von $t_0$ bis $t_E$ gleichmäßig entnommen werden kann.

Die vorliegende Erfindung eignet sich damit insb. zum induktiven Senden und Empfangen von Energiesignalen und/oder Datensignalen.

## Patentansprüche

1. Transponder (1), mit

   - einem Transponderschwingkreis (2) bestehend aus einem Schwingkreiskondensator (14) und einer Schwingkreisspule (15), welche zur induktiven Energie- und/oder Datenübertragung eine induktive Kopplung zu einer Basisstation (20) aufweist;
   - einem Energiespeicher (13), welcher beim Senden einen Entladestrom $I_{Ce}$ bereitstellt; und
   - mit einer Anregevorrichtung (3), welche zwischen dem Transponderschwingkreis (2) und dem Energiespeicher (13) angeordnet ist und welche eine einstellbare Referenzspannung $U_{ref}$ erzeugt,

   **dadurch gekennzeichnet, dass**
   die Anregevorrichtung (3) einen Referenzspannungsbildner (7) aufweist, der aus der jeweils eingangsseitig zugeführten Kenngröße eines Ladespannungsgebers (4), die der während des Empfangens von Energie und/oder Daten gemessenen Anfangsladespannung $U_{C1}$ des Energiespeichers (13) entspricht, eines Sendedauergebers (5) mit

einstellbarer Sendedauer $t_s$ und eines Schaltuhgsparametergebers (6) zur Speicherung physikalischer Schaltungs-parameter $\tau$ die .Referenspannung ($U_{ref}$) bildet,
dass die Anregevorrichtung (3) ferner eine erste Differenzvorrichtung (8) aufweist, die aus der Differenz der Entladespannung ($U_{Ce}$) des Energiespeichers (13) und der Refenzspannung ($U_{ref}$) einen Sendespannungssollwert $U_{S-Soll}$ bildet, und dass

- die am Transponderschwingkreis (2) anliegende Sendespannung $U_{S-TSK}$ mittels der Anregevorrichtung (3) derart geregelt ist, dass eine Hüllkurve H der Sendespannung $U_{S-TSK}$ über eine Sendedauer $t_s$ konstant ist, so dass der konstante Entladestrom $I_{ce}$ aus dem Energiespeicher (13) den Transponderschwingkreis (2) speist und eine von der Referenzspannung $U_{ref}$ abhängige Entladespannung $U_{Ce}$ des Energiespeichers (13) bis zu der Referenzspannung $U_{ref}$ an einem Sendeende $t_E$ linear abfällt.

2. Transponder nach Anspruch 1, **dadurch gekennzeichnet, dass** die Anregevorrichtung (3) eine Sendespannungsmessvorrichtung (9) aufweist, welche die aktuelle Sendespannung $U_s$ misst und damit einen Sendespannungsistwert $U_{S-IST}$ bildet, und dass die Anregevorrichtung (3) eine zweite Differenzvorrichtung (10) aufweist, welche eine Sollwert-Istwert-Differenz SID aus dem Sendespannungssollwert $U_{S-SOLL}$ und dem Sendespannungsistwert $U_{S-IST}$ eine Sollwert-Istwert-Differenz SID berechnet.

3. Transponder nach Anspruch 1 oder 2, **dadurch gekennzeichnet , dass** die Anregevorrichtung (3) einen Regler (11) und eine Anregeschaltung (12) aufweist, wobei der Regler (11) die Sollwert-Istwert-Differenz SID aufnimmt und daraus ein Anregesignal AS generiert und der Anregeschaltung (12) zuführt, falls die Sollwert- Istwert-Differenz SID größer als Null ist, wobei die Anregeschaltung (12) bei einem Vorhandensein eines Anregesignals AS den Transponderschwingkreis (2) mittels Energie aus dem Energiespeicher (13) anregt.

4. Transponder nach Anspruch 1 bis 3, **dadurch gekennzeichnet, dass** die Anregeschaltung (12) eine gesteuerte Stromquelle aufweist, welche gesteuert durch das Anregesignal AS den Transponderschwingkreis (2) mittels des Entladestroms $I_{Ce}$ des Energiespeichers (13) anregt.

5. Transponder nach einem der vorherigen Ansprüche, **dadurch gekennzeichnet, dass** die physikalischen Schal-tungsparameter $\tau$ durch eine Schwingkreisfrequenz $f_{SK}$, eine Schwingkreisinduktivität $L_{SK}$ und/oder eine Schwingkreisgüte $Q_{SK}$ des Transponderschwingkreises (2) sowie durch eine Speicherkapazität $C_S$ des Energiespeichers (13) ausgebildet sind.

6. Transponder nach einem der vorherigen Ansprüche, **dadurch gekennzeichnet, dass** der Energiespeicher (13) als ein Speicherkondensator (13) ausgebildet ist.

**Claims**

1. Transponder (1) comprising

- a transponder resonant circuit (2) consisting of a resonant circuit capacitor (14) and a resonant circuit coil (15) which has an inductive coupling to a base station (20) for the purpose of inductive transmission of energy and/or data,
- an energy store (13) which provides a discharge current $I_{Ce}$ when sending, and
- a starter device (3) which is arranged between the transponder resonant circuit (2) and the energy store (13) and which generates an adjustable reference voltage $U_{ref}$,

**characterised in that**
the starter device (3) includes a reference voltage generator (7) which generates the reference voltage ($U_{ref}$) from the characteristic of a charge voltage sensor (4), which characteristic is supplied on the input side in each case and corresponds to the initial charging voltage $U_{Cl}$, measured during the reception of energy and/or data, of the energy store (13), a send duration sensor (5) with adjustable send duration $t_s$ and a switching parameter sensor (6) for storing physical switching parameters $\tau$,
that the starter device (3) also includes a first difference device (8) which calculates a send voltage desired value $U_{S-SOLL}$ from the difference between the discharge voltage ($U_{Ce}$) of the energy store (13) and the reference voltage ($U_{ref}$), and that

- the send voltage $U_{S-TSK}$ applied to the transponder resonant circuit (2) is regulated by means of the starter device (3) in such a way that an envelope curve H of the send voltage $U_{S-TSK}$ is constant over a send duration $t_s$, with the result that the constant discharge current $I_{Ce}$ feeds the transponder resonant circuit (2) from the energy store (13) and a discharge voltage $U_{Cc}$ of the energy store (13), which discharge voltage $U_{Cc}$ is dependent on the reference voltage $U_{ref}$, drops linearly down to the reference voltage $U_{ref}$ at an end of sending $t_E$.

2. Transponder according to claim 1, **characterised in that** the starter device (3) includes a send voltage measuring device (9) which measures the current send voltage $U_S$ and thus forms a send voltage actual value $U_{S-IST}$, and that the starter device (3) includes a second difference device (10) which calculates a desired value/actual value difference SID from the send voltage desired value $U_{S-SOLL}$ and the send voltage actual value $U_{S-IST}$.

3. Transponder according to claim 1 or 2,
   **characterised in that** the starter device (3) includes a regulator (11) and a starter circuit (12), wherein the regulator (11) takes the desired value/actual value difference SID and from it generates a starter signal AS which it feeds to the starter circuit (12) if the desired value/actual value difference SID is greater than zero, wherein if a starter signal AS is present the starter circuit (12) excites the transponder resonant circuit (2) by means of energy from the energy store (13).

4. Transponder according to one of claims 1 to 3,
   **characterised in that** the starter circuit (3) includes a controlled current source which, under the control of the starter signal AS, excites the transponder resonant circuit (2) by means of the discharge current $I_{Ce}$ of the energy store (13).

5. Transponder according to one of the preceding claims,
   **characterised in that** the physical switching parameters $\tau$ are embodied by means of a resonant circuit frequency $f_{SK}$, a resonant circuit inductance $L_{SK}$ and/or a resonant circuit quality $Q_{SK}$ of the transponder resonant circuit (2) and by means of a storage capacitance $C_S$ of the energy store (13).

6. Transponder according to one of the preceding claims,
   **characterised in that** the energy store (13) is embodied as a storage capacitor (13).


**Revendications**

1. Transpondeur (1), comprenant

   - un circuit résonant de transpondeur (2) composé d'un condensateur de circuit résonant (14) et d'une bobine de circuit résonant (15), qui présente pour la transmission inductive d'énergie et/ou de données un couplage inductif avec une station de base (20) ;
   - un accumulateur d'énergie (13) qui fournit à l'émission un courant de décharge $I_{Ce}$ ; et
   - un dispositif d'excitation (3) qui est disposé entre le circuit résonant de transpondeur (2) et l'accumulateur d'énergie (13) et qui génère une tension de référence réglable $U_{ref}$,

   **caractérisé en ce que**

   - le dispositif d'excitation (3) présente un transducteur de tension de référence (7) qui forme la tension de référence ($U_{ref}$) à partir de la grandeur caractéristique d'un générateur de tension de charge (4), amenée respectivement en entrée et correspondant à la tension de charge initiale $U_{Cl}$ de l'accumulateur d'énergie (13), mesurée pendant la réception d'énergie et/ou de données, d'un générateur de durée d'émission (5) avec une durée d'émission réglable $t_s$ et d'un générateur de paramètres de circuit (6) pour mémoriser des paramètres de circuit physiques $\tau$,
   - **en ce que** le dispositif d'excitation (3) présente en outre un premier dispositif de différence (8) qui forme une valeur de consigne de tension d'émission $U_{S-SOLL}$ à partir de la différence de la tension de décharge ($U_{Ce}$) de l'accumulateur d'énergie (13) et de la tension de référence ($U_{ref}$), et
   - **en ce que** la tension d'émission $U_{S-TSK}$ appliquée au circuit résonant de transpondeur (2) est régulée au moyen du dispositif d'excitation (3) de telle sorte qu'une enveloppante H de la tension d'émission $U_{S-TSK}$ est constante pendant une durée d'émission $t_s$, de sorte que le courant de décharge $I_{Ce}$ constant alimente le circuit résonant de transpondeur (2) à partir de l'accumulateur d'énergie (13) et qu'une tension de décharge $U_{Ce}$

dépendant de la tension de référence $U_{ref}$ de l'accumulateur d'énergie (13) diminue de façon linéaire jusqu'à la tension de référence $U_{ref}$ à la fin d'émission $t_E$.

2. Transpondeur selon la revendication 1,
**caractérisé en ce que** le dispositif d'excitation (3) présente un dispositif de mesure de tension d'émission (9) qui mesure la tension d'émission actuelle $U_s$ et forme ainsi une valeur réelle de tension d'émission $U_{S-IST}$, et **en ce que** le dispositif d'excitation (3) présente un deuxième dispositif de différence (10), qui calcule une différence valeur de consigne/ valeur réelle SID à partir de la valeur de consigne de tension d'émission $U_{S-SOLL}$ et de la valeur réelle de tension d'émission $U_{S-IST}$.

3. Transpondeur selon la revendication 1 ou 2,
**caractérisé en ce que** le dispositif d'excitation (3) présente un régulateur (11) et un circuit d'excitation (12), dans lequel le régulateur (11) enregistre la différence valeur de consigne/ valeur réelle SID et en génère un signal d'excitation AS et l'amène au circuit d'excitation (12) au cas où la différence valeur de consigne/ valeur réelle SID serait supérieure à zéro, dans lequel le circuit d'excitation (12), en présence d'un signal d'excitation AS, excite le circuit résonant de transpondeur (2) au moyen de l'énergie provenant de l'accumulateur d'énergie (13).

4. Transpondeur selon les revendications 1 à 3,
**caractérisé en ce que** le circuit d'excitation (12) présente une source de courant commandée qui, commandée par le signal d'excitation AS, excite le circuit résonant de transpondeur (2) au moyen du courant de décharge $I_{Ce}$ de l'accumulateur d'énergie (13).

5. Transpondeur selon l'une quelconque des revendications précédentes, **caractérisé en ce que** les paramètres de circuit physiques $\tau$ sont réalisés par une fréquence de circuit résonant $f_{SK}$, une inductance de circuit résonant $L_{SK}$ et/ou une qualité de circuit résonant $Q_{SK}$ du circuit résonant de transpondeur (2) ainsi que par une capacité d'accumulation $C_s$ de l'accumulateur d'énergie (13).

6. Transpondeur selon l'une quelconque des revendications précédentes, **caractérisé en ce que** l'accumulateur d'énergie (13) est réalisé comme un condensateur de puissance (13).

# FIG 1
Stand der Technik

EP 1 741 050 B1

FIG 2A
Stand der Technik

$U_{ce}, U_{S\text{-}TSK}$

$U_{S\text{-}TSK}$

H

$U_{cl}$

$U_{ref}$ {

$U_{ce}$

$U_{S\text{-}SOLL} = U_{ce} - U_{ref}$

$t_0$   $t_1$   $t_2$   $t_3$   $t_4$   $t_5$   $t_6$   $t_7$   $\cdots$   $t_Z$   $t_E$   $t$

$t_S$

FIG 2B
Stand der Technik

$I_{ce}$

$t_0$   $t_1$   $t_2$   $t_3$   $t_4$   $t_5$   $t_6$   $t_7$   $\cdots$   $t_Z$   $t_E$   $t$

EP 1 741 050 B1

# FIG 3

EP 1 741 050 B1

# FIG 4

EP 1 741 050 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5491483 A
- US 5621396 A